# EUROPÄISCHE PATENTSCHRIFT

(11) **EP 3 741 011 B1**
(45) Veröffentlichungstag und Bekanntmachung des Hinweises auf die Patenterteilung: **07.02.2024**
(21) Anmeldenummer: 18826280.2
(22) Anmeldetag: 17.12.2018
(51) Int. Cl.: H01R 13/516, H01R 13/639, H02G 15/04, H02G 3/08, H01R 13/52, H01R 13/512

(54) **SCHUTZVORRICHTUNG FÜR EINE STECKVERBINDUNG**
PROTECTION DEVICE FOR A PLUG-IN CONNECTION
DISPOSITIF DE PROTECTION POUR ENSEMBLE DE RACCORDEMENT PAR ENFICHAGE

(30) Priorität: 15.01.2018 DE 102018100780
(43) Veröffentlichungstag der Anmeldung: 25.11.2020
(73) Patentinhaber: Endress+Hauser SE+Co. KG, 79689 Maulburg (DE)
(72) Erfinder: LINIGER, Jeannette, 8952 Schlieren (CH); SCHMIDT, Robert, 79650 Schopfheim (DE); FERRARO, Franco, 79650 Schopfheim (DE); BECHTEL, Gerd, 79585 Steinen (DE); HUWYLER, Willy, 6330 Cham (CH)
(74) Vertreter: Koslowski, Christine Adelheid
(86) Internationale Anmeldenummer: PCT/EP2018/085266
(87) Internationale Veröffentlichungsnummer: WO 2019/137747

(56) Entgegenhaltungen:
- WO-A1-2012/141774
- WO-A1-2015/058237
- WO-A1-2017/205935
- DE-A1- 10 327 013
- GB-A- 2 343 302

## Beschreibung

Die vorliegende Erfindung betrifft ein Feldgerät, insbesondere der Prozessmesstechnik, mit einer Sensoreinheit und einer zumindest teilweise in einem Gehäuse angeordneten Elektronikeinheit, umfassend eine Schutzvorrichtung für eine Steckverbindung zwischen einem Stecker und einer Buchse. Insbesondere handelt es sich um eine lösbare Steckverbindung. Die Buchse ist zumindest teilweise an oder in dem Gehäuse der Elektronikeinheit des Feldgeräts angeordnet.

Feldgeräte dienen der Überwachung und/oder Bestimmung mindestens einer, beispielsweise chemischen oder physikalischen, Prozessgröße eines Mediums. Im Rahmen der vorliegenden Anmeldung werden im Prinzip alle Messgeräte als Feldgerät bezeichnet werden, die prozessnah eingesetzt werden und die prozessrelevante Informationen liefern oder verarbeiten, also auch Remote I/Os, Funkadapter bzw. allgemein elektronische Komponenten, die auf der Feldebene angeordnet sind. Eine Vielzahl solcher Feldgeräte wird von Firmen der Endress + Hauser-Gruppe hergestellt und vertrieben. Ein solches Feldgerät nach dem Oberbegriff des Anspruchs 1 ist beispielsweise in dem Dokument DE 10327013 A1 offenbart.

Beispielsweise kann es sich bei dem Feldgerät um ein Füllstandsmessgerät, Durchflussmessgerät, Druck- und Temperaturmessgeräte, pH- und/oder pH-Redoxpotentialmessgerät, oder auch um ein Leitfähigkeitsmessgerät, handeln, welches der Erfassung der jeweiligen Prozessgröße, wie dem Füllstand, dem Durchfluss, dem Druck, der Temperatur, dem pH-Wert, einem Redoxpotential, oder der Leitfähigkeit des jeweiligen Mediums dient. Die den unterschiedlichen Gattungen von Feldgeräten jeweils zugrundeliegenden Messprinzipien sind aus dem Stand der Technik hinlänglich bekannt, und werden an dieser Stelle nicht einzeln angeführt. Bei Durchflussmessgeräten handelt es sich insbesondere um Coriolis-, Ultraschall-, Vortex-, thermische und/oder magnetisch induktiven Durchflussmessgeräte. Füllstandsmessgeräte wiederum sind insbesondere als Mikrowellen-Füllstandsmessgeräte, Ultraschall-Füllstandsmessgeräte, zeitbereichsreflektometrische Füllstandsmessgeräte (TDR), radiometrische Füllstandsmessgeräte, kapazitive Füllstandsmessgeräte, konduktive Füllstandsmessgeräte und/oder temperatursensitive Füllstandsmessgeräte ausgestaltet. Bei Druckmessgeräten handelt es sich bevorzugt um sogenannte Absolut-, Relativ- oder Differenzdruckgeräte, während ein Temperaturmessgerät wiederum häufig ein Thermoelement oder einen temperaturabhängigen Widerstand zur Ermittlung der Temperatur aufweist.

Ein Feldgerät umfasst zumindest eine zumindest teilweise und zumindest zeitweise mit dem Prozess in Berührung kommende Sensoreinheit und eine Elektronikeinheit, welche beispielsweise der Signalerfassung, -auswertung und/oder -speisung dient. Zumindest die Elektronikeinheit des jeweiligen Feldgeräts ist typischerweise in einem Gehäuse angeordnet und verfügt üblicherweise über zumindest einen Anschlusselement. Es sind sowohl Feldgeräte bekannt geworden, bei denen die Elektronikeinheit gemeinsam mit der Sensoreinheit angeordnet ist. Alternativ können die Elektronikeinheit und Sensoreinheit aber auch in Form separater Einheiten ausgestaltet sein.

Bei dem zumindest einen Anschlusselement handelt es sich üblicherweise um eine Buchse einer Steckverbindung, welche zur Verbindung des Feldgeräts mit einer weiteren Einheit, beispielsweise einer externen Einheit, wie einer Prozessleitwarte, einer Energieversorgungseinheit, oder auch der Sensoreinheit des Feldgeräts, mittels eines Kabels, welches mit einem zur Buchse komplementären Stecker ausgestattet ist.

Für die Gehäuse und Steckverbindungen zum Anschließen der Elektronikeinheit gibt es je nach Gattung des Feldgeräts, also je nach der zu bestimmenden und/oder überwachenden Prozessgröße und/oder je nach der für das Feldgerät angedachten Anwendung oder Verwendung, unterschiedlichste Ausgestaltungen. Dabei spielen verschiedene, insbesondere applikationsspezifische, Anforderungen eine entscheidende Rolle. Feldgeräte, die auch in explosionsgefährdeten Bereichen betrieben werden sollen, müssen beispielsweise hohen Sicherheitsanforderungen hinsichtlich des Explosionsschutzes genügen. In dieser Hinsicht wird zwischen verschiedenen Explosionsschutzarten und Explosionszonen unterschieden, wobei die verschiedenen Anforderungen beispielsweise in der europäischen ATEX- oder der nordamerikanischen NEC-Richtlinie sowie der darauf basierenden IEC-, oder die NEC- Norm beschrieben sind.

Beispielsweise geht es darum, die Bildung von Funken sicher zu vermeiden oder zumindest sicherzustellen, dass ein im Fehlerfall entstandener Funke keine Auswirkungen auf die Umgebung hat.

Bezüglich der jeweils verwendeten Steckverbindungen wird wiederum unter anderem überprüft, ob die Steckverbindung gegen das Eindringen von Fremdkörpern, insbesondere Feststoffteilchen, beispielsweise Staub, geschützt ist, ob sie einem mechanischen Schlagtest standhält, und insbesondere, ob nach einem mechanischen Schlag immer noch Schutz gegen das Eindringen von Fremdkörpern besteht. Insbesondere darf die Steckverbindung bei Einwirkung einer äußeren Kraft (z. B. 4J oder 7J) nicht brechen.

Der vorliegenden Erfindung liegt die Aufgabe zugrunde, eine Steckverbindung derart auszugestalten, dass sie eine hohe mechanische Stabilität aufweist.

Diese Aufgabe wird gelöst durch ein Feldgerät gemäß Anspruch 1. Dieses Feldgerät umfasst eine Schutzvorrichtung für zumindest eine Komponente einer, insbesondere lösbaren, Steckverbindung zwischen einem Stecker und einer Buchse, welche zumindest teilweise an oder in einem Gehäuse, insbesondere einer Elektronikeinheit, vorzugsweise eines Feldgeräts, angeordnet ist.

Die erfindungsgemäße Schutzvorrichtung umfasst zumindest eine erste und eine zumindest teilweise zur ersten komplementäre zweite Halbschale, wobei die beiden Halbschalen derart ausgestaltet sind, dass sie in einem miteinander verbundenen Zustand ein Innenvolumen definieren und zumindest den Stecker, bzw. den Stecker und die Buchse, zumindest teilweise umgeben, zumindest eine erste Durchführung zur Durchführung des Steckers, oder des Steckers und einem an dem Stecker befestigten Kabel in das Innenvolumen der Schutzvorrichtung, zumindest eine Befestigungseinheit zur, insbesondere lösbaren, Befestigung der Schutzvorrichtung an dem Gehäuse, und zumindest eine Verbindungseinheit zur, insbesondere lösbaren, Verbindung der beiden Halbschalen miteinander.

Die Schutzvorrichtung umgibt also zumindest teilweise die Steckverbindung. Insbesondere kann die Schutzvorrichtung vorteilhaft nachträglich an eine bestehende, insbesondere lösbare, Steckverbindung, insbesondere ebenfalls lösbar, angebracht werden. Auf diese Weise kann die Schutzvorrichtung jederzeit entfernt werden, wenn die Steckverbindung gelöst werden soll. Ebenso kann vorteilhaft aber auch die Schutzvorrichtung einzeln getauscht werden. Bevorzugt werden zuerst der Stecker und die Buchse miteinander verbunden, und anschließend die Schutzvorrichtung angebracht, welche dem Schutz der Steckverbindung dient. Hierbei kann es sich sowohl um eine mechanische Schutzfunktion handeln, als auch um einen Schutz gegenüber dem Eindringen von Fremdkörpern, beispielsweise Staubpartikel, in die Steckverbindung.

Die beiden Halbschalen bestehen bevorzugt aus einem Metall, aus einem, insbesondere thermoplastischen, Kunststoff, oder auch aus einem Harz.

Die Schutzvorrichtung bietet eine erhöhte Sicherheit der Steckverbindung. Im Falle, dass die Steckverbindung an einem Gehäuse eines Feldgeräts anbringbar ist, ist das Feldgerät bevorzugt zum Betrieb in einer explosionsgefährdeten Atmosphäre ausgestaltet. Beispielsweise kann eine Verwendung des Feldgeräts gemäß der Zündschutzart Staub-Ex gewährleistet werden. Elektrische Geräte, die gemäß dieser Schutzklasse ausgestaltet sind, ist beispielsweise basierend auf dem Gehäuseschutz sichergestellt, dass kein Staub in das Gehäuse eintreten kann. Staub kann beispielsweise in Verbindung mit einer innerhalb eines Gehäuses angeordneten Zündquelle, beispielsweise elektrische Kontakte, zu einer Explosion führen. Eine weitere Anforderung an die Verwendung eines Geräts in explosionsgefährdeter Umgebung betrifft die Schlagfestigkeit: Das Gehäuse darf durch einen Schlag, also durch Einwirkung einer äußeren Kraft nicht beschädigt werden. Eine ausreichende Dichtigkeit und mechanische Festigkeit muss also gewährleistet werden, was ebenfalls durch Verwendung einer erfindungsgemäßen Schutzvorrichtung erreicht werden kann.

Eine Ausgestaltung beinhaltet, dass die Durchführung Teil zumindest einer der beiden Halbschalen ist.

Es ist von Vorteil, wenn wobei es sich bei der ersten Durchführung um eine, insbesondere kreisrunde, Öffnung in einer Wandung einer der beiden Halbschalen handelt. Alternativ ist es aber auch denkbar, dass jede der beiden Halbschalen eine, insbesondere identisch ausgestaltete, Aussparung in einem Randbereich einer Wandung aufweist, wobei die beiden Aussparungen derart ausgestaltet, und insbesondere komplementär zueinander ausgebildet, sind, dass sie im miteinander verbundenen Zustand der Halbschalen die erste Durchführung bilden. Im zusammengesetzten Zustand der Schutzvorrichtung bilden die beiden Halbschalen dann beispielsweise eine, insbesondere kreisrunde Öffnung, welche als Durchführung dient. Im Falle dass mehrere Durchführungen vorgesehen sind, können die weiteren Durchführungen sowohl analog als auch unterschiedlich zur ersten Durchführung ausgestaltet sein.

Eine weitere Ausgestaltung beinhaltet, dass die Befestigungseinheit Teil zumindest einer der beiden Halbschalen ist. Die Befestigungseinheit kann insbesondere derart ausgestaltet sein, dass sie an einer der beiden Halbschalen anbringbar oder befestigbar ist. Alternativ ist es denkbar, dass zumindest eine erste Komponente der Befestigungseinheit an der ersten Einheit anbringbar oder befestigbar ist, während zumindest eine zweite Komponente der Befestigungseinheit an der zweiten Halbschale anbringbar oder befestigbar ist.

Es ist von Vorteil, wenn die Befestigungseinheit zumindest teilweise komplementär zu dem Gehäuse im Bereich der Buchse ausgestaltet ist. Insbesondere ist die Befestigungseinheit derart ausgestaltet, dass die Schutzvorrichtung auf einen Teilbereich des Gehäuses aufsteckbar ist, bzw. an einem Teilbereich des Gehäuses befestigbar oder anbringbar ist.

Es ist ebenso von Vorteil, wenn die Befestigungseinheit derart ausgestaltet ist, dass die Schutzvorrichtung kraft- und/oder formschlüssig an dem Gehäuse befestigbar ist. Durch eine kraft- und/oder formschlüssige Verbindung der Schutzvorrichtung mit dem Gehäuse kann eine erhöhte mechanische Stabilität, insbesondere bezüglich mechanischen Schlägen auf die Steckverbindung bzw. die Schutzvorrichtung, erreicht werden.

Beispielsweise kann die Befestigungseinheit in zumindest einem Teilbereich zumindest einer Komponente der Schutzvorrichtung, insbesondere zumindest eine der beiden Halbschalen, komplementär zu einem Teilbereich des Gehäuses, an welchem die Schutzvorrichtung befestigt wird, ausgestaltet sein. Insbesondere ist der Teilbereich der Schutzvorrichtung in einem inneren Bereich komplementär zu einem äußeren Bereich des Teilbereichs des Gehäuses ausgestaltet.

Eine Ausgestaltung beinhaltet, dass wobei es sich bei der Verbindungseinheit um eine Einheit zur Herstellung einer Schraubverbindung, einer Verrastung, oder einer Verplombung der beiden Halbschalen miteinander handelt. Insbesondere kann die Schutzvorrichtung derart ausgestaltet sein, dass ein Verbinden der beiden Halbschalen mittels der Verbindungseinheit gleichzeitig zu einer Befestigung der Halbschalen an dem Gehäuse führt. Dies kann insbesondere durch eine geeignete Positionierung der Befestigungseinheit relativ zur Verbindungseinheit erreicht werden.

Im Falle, dass mittels der Verbindungseinheit eine Schraubverbindung herstellbar ist, umfasst die Verbindungseinheit beispielsweise zumindest eine Schraube, und zumindest ein in zumindest eine Komponente der Schutzvorrichtung eingebrachtes Gewinde. Bevorzugt umfasst eine derartige Verbindungseinheit zumindest zwei Schrauben, welche auf gegenüberliegenden Seiten der Halbschalen angeordnet sind und zur lösbaren Verbindung der beiden Halbschalen miteinander dienen.

In einer weiteren Ausgestaltung handelt es sich bei der Steckverbindung um eine M12-Steckverbindung.

Eine Ausgestaltung sieht vor, dass zumindest eine der Halbschalen, insbesondere in einem inneren Bereich, eine Rippenstruktur aufweist. Eine Rippenstruktur dient einer Erhöhung der mechanischen Stabilität.

Gemäß einer weiteren Ausgestaltung weist die Schutzvorrichtung eine Öffnung auf, durch welche Feuchtigkeit aus dem Innenvolumen der Schutzvorrichtung herausgelangen kann. In das Innenvolumen der Schutzvorrichtung gelangende Feuchtigkeit kann also durch die Öffnung abfließen.

Es ist von Vorteil, wenn zumindest eine der beiden Halbschalen aus einem transparenten Material hergestellt ist. Einerseits kann auf diese Weise überprüft werden, ob der Stecker korrekt in die Buchse eingesteckt ist. Darüber hinaus kann gewährleistet werden, dass ggf. im Bereich der Steckverbindung oder des Gehäuses angebrachte lichtemittierende Elemente, beispielsweise LEDs, trotz des Anbringens einer Schutzvorrichtung von außen sichtbar bleiben. Solche LEDs werden im Bereich von Elektronikeinheiten, insbesondere von Feldgeräten vielfach eingesetzt, um beispielsweise bestimmte Funktionalitäten der Elektronikeinheit bzw. des Feldgeräts zu signalisieren oder auch, um auftretende Defekte anzuzeigen.

Es ist ebenso von Vorteil, wenn eine Dicke der Wandung zumindest einer der beiden Halbschalen zumindest abschnittsweise variabel ist, insbesondere wobei die Dicke der Wandung in einem vorgebbaren Teilbereich verringert ist. Dies ist insbesondere dann von Vorteil, wenn die Halbschalen außerdem aus einem transparenten Material gefertigt sind. In diesem Falle kann die Dicke der Wandung abschnittsweise derart gewählt werden, dass die Halbschalen als Lichtleiter für im Bereich der Steckverbindung oder im Bereich der Gehäuse angebrachte lichtemittierende Elemente dienen und für eine verbesserte Sichtbarkeit der Anzeige der lichtemittierenden Elemente von außen dienen. Die Wandung der Halbschalen ist dann insbesondere derart ausgestaltet, dass im an dem Gehäuse befestigten Zustand der Schutzvorrichtung Teilbereich der Wandung mit verringerter Wandstärke (oder vergrößerter Wandstärke) im Bereich der jeweiligen lichtemittierten Elemente angeordnet sind.

Eine bevorzugte Ausgestaltung der Schutzvorrichtung beinhaltet, dass die erste Durchführung im Bereich einer durch die Halbschalen gebildeten Wandung auf einer der Befestigungseinheit gegenüberliegenden Seite angeordnet ist. Eine derartige Anordnung der Durchführung eignet sich für eine Steckverbindung, bei welchem ein gerader Stecker verwendet wird.

Eine bevorzugte alternative Ausgestaltung der Schutzvorrichtung beinhaltet dagegen, dass die erste Durchführung im Bereich einer durch die Halbschalen gebildeten Wandung, welche in einem vorgebbaren Winkel, insbesondere senkrecht, zu einer Ebene parallel zur Befestigungseinheit verläuft, angeordnet ist. Eine solche Anordnung der Durchführung wiederum eignet sich insbesondere für gewinkelte, insbesondere rechtwinklige, Stecker.

In einer besonders bevorzugten Ausgestaltung umfasst die Schutzvorrichtung schließlich zumindest zwei, vorzugsweise drei, Durchführungen, wobei die erste Durchführung im Bereich einer durch die Halbschalen gebildeten Wandung auf einer der Befestigungseinheit gegenüberliegenden Seite angeordnet ist, wobei eine zweite Durchführung im Bereich einer durch die Halbschalen gebildeten Wandung, welche in einem vorgebbaren Winkel, insbesondere senkrecht, zu einer Ebene parallel zur Befestigungseinheit verläuft, angeordnet ist, und wobei vorzugsweise eine dritte Durchführung im Bereich einer durch die Halbschalen gebildeten Wandung, welche senkrecht zu einer Ebene parallel zur Befestigungseinheit verläuft und gegenüberliegende zur zweiten Durchführung, angeordnet ist. Durch das Bereitstellen mehrerer Durchführungen wird erreicht, dass ein und dieselbe Schutzvorrichtung universell für gerade und gewinkelte Stecker einsetzbar ist. Im Falle, dass drei Durchführungen bereitgestellt werden, ist es aufgrund der sich daraus ergebenden Symmetrie insbesondere vorteilhaft möglich, beide Halbschalen mittels des gleichen Werkzeugs herzustellen. Dies wiederum reduziert den Fertigungsaufwand und damit einhergehend die Kosten erheblich.

Die Erfindung wird nachfolgend anhand der in Figuren Fig. 1 - Fig.4 dargestellten Ausführungsbeispielen näher erläutert. Es zeigt:
Fig. 1 eine schematische Darstellung einer in einem Gehäuse angeordneten Elektronikeinheit mit einer Steckverbindung,
Fig.2 eine Ausgestaltung der erfindungsgemäßen Schutzvorrichtung mit geradem Stecker,
Fig.3 eine Ausgestaltung der erfindungsgemäßen Schutzvorrichtung mit gewinkeltem Stecker, und
Fig. 4 eine perspektivische Ansicht der beiden Halbschalen der Schutzvorrichtung.

In den Figuren sind gleiche Elemente mit gleichen Bezugszeichen versehen.

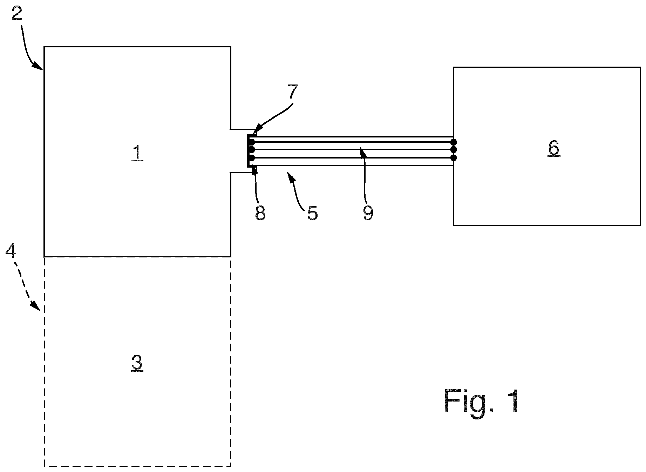

In Fig. 1 ist eine schematische Darstellung einer in einem Gehäuse 2 angeordneten Elektronikeinheit 1 gezeigt. Beispielsweise, aber nicht notwendigerweise, handelt es sich bei der Elektronikeinheit 1 um die Elektronikeinheit 1 eines Feldgeräts 4, welches ferner über eine mit der Elektronikeinheit 1 verbundene Sensoreinheit 3 (gestrichelt) verfügt.

Die Elektronikeinheit 1 ist über eine Steckverbindung 5 mit einer externen Einheit 6 verbunden. Hierbei kann es sich beispielsweise um eine Prozessleitwarte handeln. Anstelle der externen Einheit 6 kann die Elektronikeinheit 2 über das Kabel 5 mit einer anderen Vorrichtung [nicht gezeigt] verbunden sein. Jede mit der Elektronikeinheit 2 über ein Kabel 9 und eine Steckverbindung 5 verbindbare Vorrichtung ist in dieser Hinsicht denkbar.

An dem Gehäuse 2 ist eine Buchse 7 der Steckverbindung 5 angeordnet. Hierzu weist das Gehäuse 2 einen Vorsprung 2a auf, in welchen die Buchse 7 eingebracht sind. Es versteht sich von selbst, dass aber auch andere Ausgestaltungen des Gehäuse 2 und der Buchse 7 denkbar sind. In die Buchse 7 ist ein zu der Buchse 7 komplementärer Stecker 8 eines Kabels 9 gesteckt, welches Kabel 9 ebenfalls mit der externen Einheit 6 verbunden ist. Im vorliegenden Beispiel handelt es sich um eine dreipolige Steckverbindung. Es versteht sich von selbst, dass aber auch zahlreiche andere Steckverbindungen, insbesondere auch solche mit einer anderen Anzahl an Polen, im Rahmen der vorliegenden Erfindung verwendet werden können.

Zur Erhöhung der mechanischen Stabilität einer Steckverbindung 5, schlägt die vorliegende Erfindung die Verwendung einer Schutzvorrichtung 10 vor. Insbesondere im Falle der Verwendung der Elektronikeinheit 1 in einem explosionsgefährdeten Bereich ist es erforderlich, dass die Steckverbindung 5 gegenüber einem mechanischen Schlag standhalten. Die Steckverbindung 5 darf insbesondere in Folge einer äußeren Krafteinwirkung nicht brechen. Auch muss die Steckverbindung auch nach einem mechanischen Schlag vor dem Eindringen von Fremdkörpern geschützt sein.

Die nachfolgenden Figuren beschreiben beispielhaft bevorzugte Ausgestaltungen für die erfindungsgemäße Schutzvorrichtung 10.

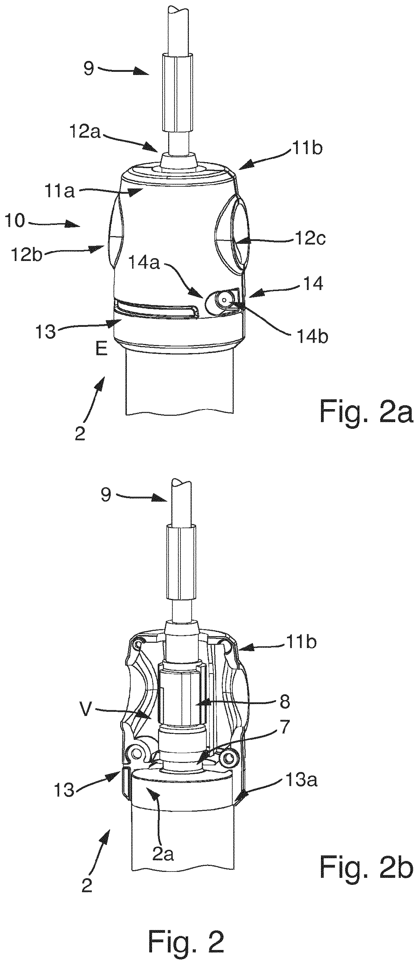

In Fig. 2 ist eine erste Ausgestaltung einer Schutzvorrichtung 10 für eine Steckverbindung 5 mit einem geraden Stecker 8 gezeigt.

Die Schutzvorrichtung 10 verfügt über zwei zueinander komplementär ausgestaltete Halbschalen 11a und 11b, welche mittels der Verbindungseinheit 14 miteinander lösbar verbindbar sind. Im miteinander verbundenen Zustand bilden die beiden Halbschalen 11a und 11b einen Innenvolumen V, welches die Buchse 7 und den Stecker 8 der Steckverbindung 5 umgibt, wie in Fig. 2b ersichtlich.

Die Verbindungseinheit 14 umfasst in der hier gezeigten Ausgestaltung Mittel zur Herstellung einer Schraubverbindung. Die beiden Halbschalen 11a und 11b verfügen jeweils über zwei auf gegenüberliegenden Seiten angeordnete zueinander komplementäre Bohrungen 14a, 14a' [hier nur eine sichtbar] mit Gewinden [nicht sichtbar], in welche Schrauben 14b, 14b' [ebenfalls nur eine sichtbar] zur Herstellung der Verbindung der beiden Halbschalen 11a und 11b eingeschraubt werden können.

Mittels der Befestigungseinheit 13 kann im vorliegenden Fall eine form- und kraftschlüssige Befestigung der Schutzvorrichtung 10 an dem Gehäuse 2 erreicht werden. Wie am besten in Fig. 2b zu sehen ist, sind die beiden Halbschalen 11a und 11b jeweils in einem Teilbereich 13a, 13a' [nur eine Halbschale 11b ist in Fig. 2b zu sehen] komplementär zu einem Teilbereich 2a des Gehäuses 2 ausgestaltet, an welchen Teilbereich 2a die Schutzvorrichtung 10 angebracht, bzw. an welchem die Schutzvorrichtung 10 befestigt, ist.

Die beiden Halbschalen 11a und 11b verfügen ferner über eine erste Durchführung 12a zur Durchführung des Steckers 8 in das Innenvolumen V der Schutzvorrichtung 10. Im hier gezeigten Beispiel weist jede der beiden Halbschalen 11a, 11b zu diesem Zweck eine Aussparung in einem Randbereich einer Wandung auf, wobei die beiden Aussparungen derart ausgestaltet, und insbesondere komplementär zueinander ausgebildet, sind, dass sie im miteinander verbundenen Zustand der Halbschalen 11a,11b die erste Durchführung 12a bilden. Im Beispiel gemäß Fig. 2 ist die erste Durchführung 12a im Bereich einer durch die Halbschalen 11a, 11b gebildeten Wandung auf einer der Befestigungseinheit 13 gegenüberliegenden Seite angeordnet.

Wie in Fig. 2 sichtbar, jedoch nicht zwingend notwendig, umfasst die Schutzvorrichtung 10 neben der ersten Durchführung 12a weiterhin eine zweite 12a und eine dritte Durchführung 12c, welche jeweils auf gegenüberliegenden Seiten einer Wandung der Schutzvorrichtung 10, bzw. von Wandungen der beiden Halbschalen 11a, 11b, welche senkrecht zu einer Ebene E parallel zur Befestigungseinheit 13 verläuft bzw. verlaufen.

Durch diese beiden zusätzlichen Durchführungen 12b, 12c werden im vorliegenden Beispiel für gerade Steckverbindungen jedoch keine Stecker 8 oder Anschlusskabel 9 geführt. In einer anderen Ausgestaltung können die zweite 12b und/oder die dritte Durchführung 12c auch weggelassen werden.

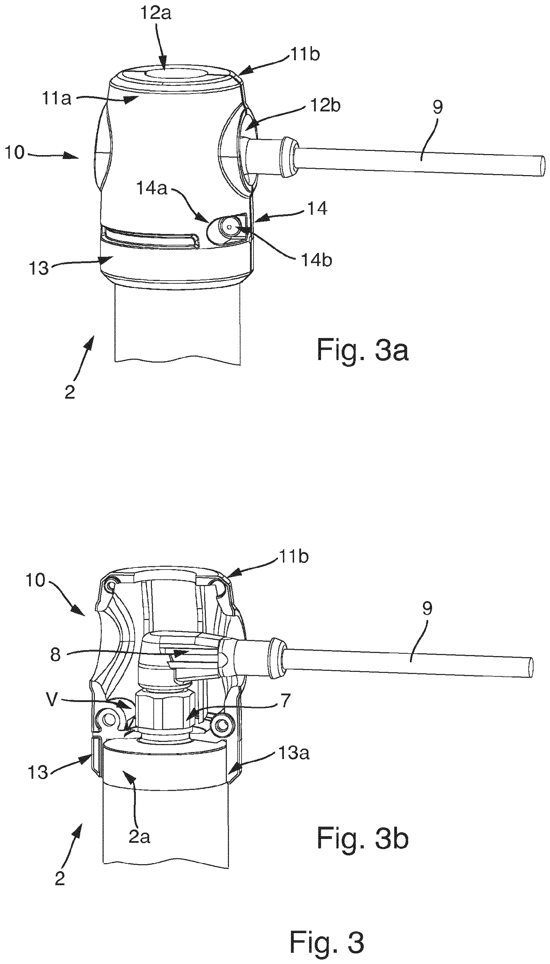

Eine Ausgestaltung der Schutzvorrichtung 10 mit einem gewinkelten Stecker 8 ist in Fig. 3 gezeigt. Ähnlich wie in Fig.2 zeigt Fig. 3a eine perspektivische Ansicht der Schutzvorrichtung 10, während in Fig. 3b eine Schnittdarstellung gezeigt ist. Auf bereits in Zusammenhang mit Fig. 2 erläuterte Bezugszeichen wird für Fig. 3 nicht erneut im Detail eingegangen. Im Gegensatz zu Fig.2 ist in Fig. 3 der Stecker 8 durch die dritte Durchführung 12c in das Innenvolumen V der Schutzvorrichtung 10 geführt. Im Falle der Ausgestaltung gemäß Fig. 3 sind die erste 12a und zweite Durchführung 12b optional und können in anderen Ausgestaltungen auch weggelassen werden. Ferner ist es ebenfalls denkbar, den gewinkelten Stecker 8 durch die zweite Durchführung 12b zu führen, derart, dass die erste 12a und dritte Durchführung 12c frei bleiben.

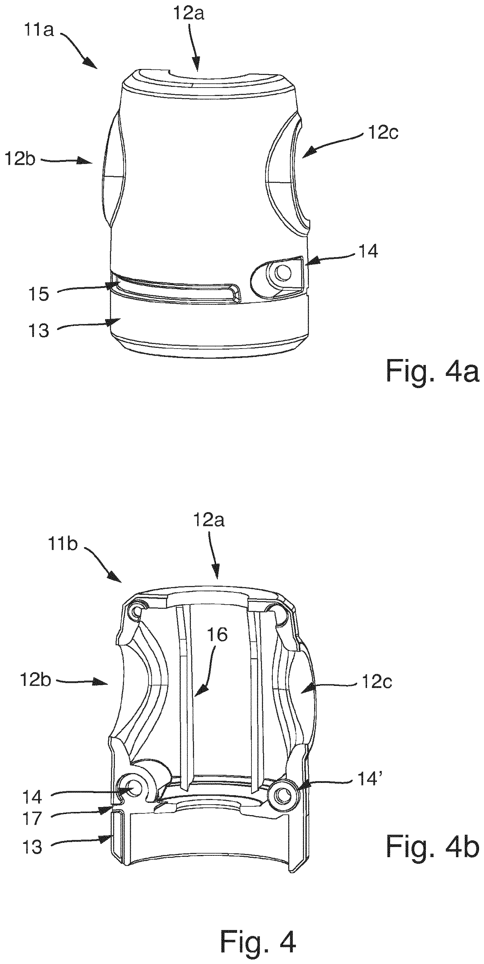

Eine perspektivische Ansicht der beiden Halbschalen 11a und 11b der Schutzvorrichtung 10 ist schließlich Gegenstand von Fig. 4. In Fig. 4a ist die erste Halbschale 11a dargestellt, derart, dass ein äußerer Bereich der Halbschale 11a sichtbar ist. Für die in Fig. 4b gezeigte zweite Halbschale 11b ist dagegen ein innerer Bereich der Halbschale 11b sichtbar. Wieder sind die drei Durchführungen 12a-12c der Schutzvorrichtung 10, welche durch zueinander komplementäre Aussparungen in den jeweiligen Wandungen der beiden Halbschalen 11a und 11b gebildet werden. Der Vorteil einer Ausgestaltung der Schutzvorrichtung 10 mit drei Durchführungen 12a-12c liegt darin, dass die Schutzvorrichtung 10 universell sowohl für gerade als auch für gewinkelte Stecker 8 einsetzbar ist. Darüber hinaus zeichnet sich eine derartige Schutzvorrichtung 10 durch ein hohes Maß an Symmetrie aus. Es ist beispielsweise von Vorteil, dass im Falle von drei Durchführungen 12a-12c beide Halbschalen 11a und 11b mit dem gleichen Werkzeug fertigbar sind.

Die beiden Halbschalen 1 1a und 11b gemäß Fig. 4 weisen im inneren Bereich jeweils eine Rippenstruktur 16 auf, welche in Fig. 4b zu sehen ist. Diese dient der Erhöhung der mechanischen Stabilität der Schutzvorrichtung 10. Weiterhin verfügt die Schutzvorrichtung 10 aus Fig. 4 über eine Öffnung 17, durch welche in das Innenvolumen V der Schutzvorrichtung 10 eingedrungene Feuchtigkeit wieder aus der Schutzvorrichtung 10 herausgelangen kann. Die Öffnung 17 ist im vorliegenden Beispiel in die Halbschalen 11a bzw. 11b eingebracht. Es sei darauf verwiesen, dass sowohl eine Öffnung 17 in einer Wandung einer der beiden Halbschalen 11a, 11b denkbar ist, als auch eine Ausgestaltung der Halbschalen 11a und 11b mit zwei zueinander komplementären Aussparen im Bereich einer Außenwandung, welche im miteinander verbundenen Zustand der beiden Halbschalen 11a und 11b die Öffnung 17 bilden.

Weiterhin ist die Dicke d der Wandung der beiden Halbschalen 11a und 11b in einem Teilbereich 15 verringert. Dies ist insbesondere dann von Vorteil, wenn die Halbschalen 11a und 11b außerdem aus einem transparenten Material gefertigt sind, wie für das Ausführungsbeispiel aus Fig. 4 angenommen werden soll. Durch diese Maßnahme kann gewährleistet werden, dass zumindest ein im Bereich der Steckverbindung 5 oder des Gehäuses 2 angebrachtes lichtemittierendes Element [nicht gezeigt] trotz des Anbringens einer Schutzvorrichtung 11 an das Gehäuse 2 von außen sichtbar bleibt. Die Halbschalen 11a und 11b dienen dann in dem Teilbereich 15 als Lichtleiter für das von dem lichtemittierenden Element ausgestrahlte Licht und leiten den Strahlengang für einen Betrachter passend um.

### Bezugszeichen

1 Elektronikeinheit
2 Gehäuse
   2a Teilbereich des Gehäuses
3 Sensoreinheit
4 Feldgerät
5 Steckverbindung
6 Externe Einheit
7 Buchse
8 Stecker
9 Kabel
10 Schutzvorrichtung
11a, 11b erste und zweite Halbschale
12,12a-12c Durchführungen
13 Befestigungseinheit
   13a Teilbereich der Halbschalen
14 Verbindungseinheit
   14a Bohrung mit Innengewinde
   14b Schraube
15 Teilbereich mit verringerter Wandstärke
16 Rippenstruktur
17 Öffnung
V Innenvolumen

## Patentansprüche

1. Feldgerät (3), insbesondere der Prozessmesstechnik, mit einer Sensoreinheit und einer zumindest teilweise in einem Gehäuse (2) angeordneten Elektronikeinheit (1), umfassend eine Schutzvorrichtung (10) für zumindest eine Komponente einer lösbaren Steckverbindung (5) zwischen einem Stecker (8) und einer Buchse (7), welche Buchse (7) zumindest teilweise an oder in dem Gehäuse (2) der Elektronikeinheit (1) des Feldgeräts (3) angeordnet ist,
**dadurch gekennzeichnet, dass** die Schutzvorrichtung (10) umfasst: zumindest eine erste (11a) und eine zumindest teilweise zur ersten (11a) komplementäre zweite Halbschale (11b),
wobei die beiden Halbschalen (11a, 11b) derart ausgestaltet sind, dass sie in einem miteinander verbundenen Zustand ein Innenvolumen (V) definieren und zumindest den Stecker (8) zumindest teilweise umgeben,
zumindest eine erste Durchführung (12) zur Durchführung des Steckers (8), oder des Steckers (8) und einem an dem Stecker (8) befestigten Kabel (9), in das Innenvolumen (V) der Schutzvorrichtung (10), wobei die erste Durchführung (12) Teil zumindest einer der beiden Halbschalen (11a, 11b) ist,
und
zumindest eine Verbindungseinheit (14) zur lösbaren Verbindung der beiden Halbschalen (11a, 11b) miteinander, und dass
die Schutzvorrichtung (10) zumindest eine Befestigungseinheit (13) zur lösbaren, kraft- und/oder formschlüssigen Befestigung der Schutzvorrichtung (10) an dem Gehäuse (2) umfasst, wobei die Befestigungseinheit (13) Teil zumindest einer der beiden Halbschalen (11a,11b) ist, und
die Befestigungseinheit (13) zumindest teilweise komplementär zu dem Gehäuse im Bereich der Buchse und derart ausgestaltet ist, dass die Schutzvorrichtung (10) auf einen Teilbereich des Gehäuses (2) der Elektronikeinheit (1) des Feldgeräts (3) aufsteckbar oder an einem Teilbereich des Gehäuses (2) der Elektronikeinheit (1) des Feldgeräts (3) befestigbar oder anbringbar ist.

2. Feldgerät (3) nach Anspruch 1,
wobei es sich bei der ersten Durchführung um eine Öffnung in einer Wandung einer der beiden Halbschalen (11a, 11b) handelt, oder
wobei jede der beiden Halbschalen (11a, 11b) eine Aussparung in einem Randbereich einer Wandung aufweist, wobei die beiden Aussparungen derart ausgestaltet sind, dass sie im miteinander verbundenen Zustand der Halbschalen die erste Durchführung (12) bilden.

3. Feldgerät (3) nach zumindest einem der vorherigen Ansprüche,
wobei es sich bei der Verbindungseinheit (14) um eine Einheit zur Herstellung einer Schraubverbindung, einer Verrastung, oder einer Verplombung der beiden Halbschalen (11a, 11b) miteinander handelt.

4. Feldgerät (3) nach zumindest einem der vorherigen Ansprüche,
wobei es sich bei der Steckverbindung (5) um eine M12-Steckverbindung handelt.

5. Feldgerät (3) nach zumindest einem der vorherigen Ansprüche,
wobei zumindest eine der Halbschalen (11a, 11b) eine Rippenstruktur (16) aufweist.

6. Feldgerät (3) nach zumindest einem der vorherigen Ansprüche,
wobei die Schutzvorrichtung (10) eine Öffnung (17) aufweist, durch welche Feuchtigkeit aus dem Innenvolumen der Schutzvorrichtung herausgelangen kann.

7. Feldgerät (3) nach zumindest einem der vorherigen Ansprüche,
wobei zumindest eine der beiden Halbschalen (11a, 11b) aus einem transparenten Material hergestellt ist.

8. Feldgerät (3) nach zumindest einem der vorherigen Ansprüche,
wobei eine Dicke der Wandung zumindest einer der beiden Halbschalen zumindest abschnittsweise variabel ist.

9. Feldgerät (3) nach zumindest einem der vorherigen Ansprüche,
wobei die erste Durchführung (12) im Bereich einer durch die Halbschalen (11a, 11b) gebildeten Wandung auf einer der Befestigungseinheit (13) gegenüberliegenden Seite angeordnet ist.

10. Feldgerät (3) nach zumindest einem der Ansprüche 1-8,
wobei die erste Durchführung (12) im Bereich einer durch die Halbschalen (11a, 11b) gebildeten Wandung, welche in einem vorgebbaren Winkel zu einer Ebene parallel zur Befestigungseinheit (13) verläuft, angeordnet ist.

11. Feldgerät (3) nach zumindest einem der vorherigen Ansprüche,
umfassend zumindest zwei (12a, 12b) Durchführungen (12a-12c), wobei die erste Durchführung (12a) im Bereich einer durch die Halbschalen (11a, 11b) gebildeten Wandung auf einer der Befestigungseinheit (13) gegenüberliegenden Seite angeordnet ist, wobei eine zweite Durchführung (12b) im Bereich einer durch die Halbschalen (11a,11b) gebildeten Wandung, welche in einem vorgebbaren Winkel, insbesondere senkrecht, zu einer Ebene parallel zur Befestigungseinheit (13) verläuft, angeordnet ist.

## Claims

1. Field device (3), in particular from the field of process measuring technology, with a sensor unit and an electronic unit (1) that is arranged at least in part in a housing (2), comprising a protective device (10) for at least one component of a detachable plug-type connection (5) between a connector (8) and a socket (7), wherein the socket (7) is arranged at least in part on or in the housing (2) of the electronic unit (1) of the field device (3), **characterized in that** the protective device (10) encompasses:
at least one first (11a) and one second half shell (11b), wherein the second half shell (11b) is at least partially complementary to the first half shell (11a),
wherein the two half shells (11a, 11b) are produced in such a way that they define an internal volume (V) when connected to one another and encapsulate the connector (8) at least in part,
at least one first feedthrough (12) for feeding through the connector (8) or both the connector (8) and a cable (9) that is attached to the connector (8) into the internal volume
(V) of the protective device (10), wherein the first feedthrough (12) is at least part of one of the two half shells (11a, 11b),
and
at least one connection unit (14) for establishing a detachable connection of the two half shells (11a, 11b) with one another,
and that
the protective device (10) encompasses at least one fixing unit (13) for producing a releasable frictional and/or positive-locking attachment of the protective device (10) on the housing (2), wherein the fixing unit (13) is part of at least one of the two half shells (11a,11b), and
the fixing unit (13) complements the housing at least in part in the area of the socket and is constructed in such a way that the protective device (10) can be plugged onto a section of the housing (2) of the electronic unit (1) of the field device (3) or otherwise attached to a section of the housing (2) of the electronic unit (1) of the field device (3).

2. Field device (3) according to claim 1,
wherein the first feedthrough is an opening in a wall of one of the two half shells (11a, 11b), or
wherein each of the two half shells (11a, 11b) exhibits a recess in an edge region of a wall, wherein the two recesses are produced in such a way that they form the first feedthrough (12) when the two half shells are connected to one another.

3. Field device (3) according to at least one of the preceding claims,
wherein the connection unit (14) is a unit for producing a screw connection, a latching mechanism, or a seal of the two half shells (11a, 11b) with one another.

4. Field device (3) according to at least one of the preceding claims,
wherein the plug-in connection (5) is an M12 plug-in connection.

5. Field device (3) according to at least one of the preceding claims,
wherein at least one of the half shells (11a, 11b) exhibits a ribbed structure (16).

6. Field device (3) according to at least one of the preceding claims,
wherein the protective device (10) exhibits an opening (17), through which moisture can escape from the internal volume of the protective device.

7. Field device (3) according to at least one of the preceding claims,
wherein at least one of the two half shells (11a, 11b) is produced from a transparent material.

8. Field device (3) according to at least one of the preceding claims,
wherein a thickness of the wall of at least one of the two half shells is variable at least in sections.

9. Field device (3) according to at least one of the preceding claims,
wherein the first feedthrough (12) is arranged on a side opposite to the fixing unit (13) in the area of a wall formed by the half shells (11a, 11b).

10. Field device (3) according to at least one of the claims 1-8,
wherein the first feedthrough (12) is arranged in the area of a wall formed by the half shells (11a,11b), which runs at a definable angle to a plane that is parallel to the fixing unit (13).

11. Field device (3) according to at least one of the preceding claims,
comprising at least two (12a, 12b) feedthroughs (12a-12c), wherein the first feedthrough (12a) is arranged on a side located opposite the fixing unit (13) in the area of a wall formed by the half shells (11a,11b), wherein a second feedthrough (12b) is arranged in the area of a wall formed by the half shells (11a, 11b) that run at a definable angle, in particular vertically, to a plane that is parallel to the fixing unit (13).

## Revendications

1. Appareil de terrain (3), notamment de la technique de mesure de process, avec une unité de capteur et une unité électronique (1) disposée au moins partiellement dans un boîtier (2),
lequel appareil comprend un dispositif de protection (10) pour au moins un composant d'une connexion enfichable (5) amovible entre un connecteur mâle (8) et un connecteur femelle (7), lequel connecteur femelle (7) est disposé au moins partiellement sur ou dans le boîtier (2) de l'unité électronique (1) de l'appareil de terrain (3),
**caractérisé en ce que** le dispositif de protection (10) comprend :
au moins une première demi-coque (11a) et une deuxième demi-coque (11b) au moins partiellement complémentaire à la première (11a),
les deux demi-coques (11a, 11b) étant conçues de telle sorte qu'elles définissent un volume intérieur (V) lorsqu'elles sont reliées entre elles et entourent au moins partiellement le connecteur (8),
au moins une première traversée (12) pour le passage du connecteur (8), ou du connecteur (8) et d'un câble (9) fixé au connecteur (8), dans le volume intérieur (V) du dispositif de protection (10), la première traversée (12) faisant partie intégrante d'au moins l'une des deux demi-coques (11a, 11b), et
au moins une unité d'assemblage (14) destinée à relier de manière amovible les deux demi-coques (11a, 11b) entre elles,
et **en ce que** le dispositif de protection (10) comprend au moins une unité de fixation (13) destinée à la fixation amovible, par liaison de force et/ou de forme, du dispositif de protection (10) sur le boîtier (2), l'unité de fixation (13) faisant partie intégrante d'au moins une des deux demi-coques (11a, 11b), et
**en ce que** l'unité de fixation (13) est au moins partiellement complémentaire par rapport au boîtier dans la zone du connecteur femelle et est conçue de telle sorte que le dispositif de protection (10) peut être enfiché sur une zone partielle du boîtier (2) de l'unité électronique (1) de l'appareil de terrain (3) ou peut être fixé ou monté sur une zone partielle du boîtier (2) de l'unité électronique (1) de l'appareil de terrain (3).

2. Appareil de terrain (3) selon la revendication 1,
pour lequel la première traversée est une ouverture dans une paroi de l'une des deux demi-coques (11a, 11b), ou
pour lequel chacune des deux demi-coques (11a, 11b) présente un évidement dans une zone de bord d'une paroi, les deux évidements étant conçus de telle sorte qu'ils forment la première traversée (12) lorsque les demi-coques sont reliées entre elles.

3. Appareil de terrain (3) selon au moins l'une des revendications précédentes, pour lequel l'unité d'assemblage (14) est une unité destinée à réaliser un assemblage par vis, un encliquetage ou un plombage des deux demi-coques (11a, 11b) l'une avec l'autre.

4. Appareil de terrain (3) selon au moins l'une des revendications précédentes, pour lequel la connexion enfichable (5) est une connexion enfichable M12.

5. Appareil de terrain (3) selon au moins l'une des revendications précédentes, pour lequel au moins l'une des demi-coques (11a, 11b) présente une structure nervurée (16).

6. Appareil de terrain (3) selon au moins l'une des revendications précédentes, pour lequel le dispositif de protection (10) comporte une ouverture (17) à travers laquelle l'humidité peut s'échapper du volume intérieur du dispositif de protection.

7. Appareil de terrain (3) selon au moins l'une des revendications précédentes, pour lequel au moins l'une des deux demi-coques (11a, 11b) est fabriquée en un matériau transparent.

8. Appareil de terrain (3) selon au moins l'une des revendications précédentes, pour lequel une épaisseur de la paroi d'au moins l'une des deux demi-coques est variable au moins par sections.

9. Appareil de terrain (3) selon au moins l'une des revendications précédentes, pour lequel la première traversée (12) est disposée dans la zone d'une paroi formée par les demi-coques (11a, 11b) sur un côté opposé à l'unité de fixation (13).

10. Appareil de terrain (3) selon au moins l'une des revendications 1 à 8,
pour lequel la première traversée (12) est disposée dans la zone d'une paroi formée par les demi-coques (11a, 11b), qui s'étend selon un angle pouvant être prédéfini par rapport à un plan parallèle à l'unité de fixation (13).

11. Appareil de terrain (3) selon au moins l'une des revendications précédentes, lequel appareil comprend au moins deux (12a, 12b) traversées (12a-12c), la première traversée (12a) étant disposée dans la zone d'une paroi formée par les demi-coques (11a, 11b) sur un côté opposé à l'unité de fixation (13), une deuxième traversée (12b) étant disposée dans la zone d'une paroi formée par les demi-coques (11a, 11b), qui s'étend selon un angle pouvant être prédéfini, notamment perpendiculairement, par rapport à un plan parallèle à l'unité de fixation (13).
